# EUROPÄISCHE PATENTSCHRIFT

(11) **EP 2 888 505 B1**
(45) Veröffentlichungstag und Bekanntmachung des Hinweises auf die Patenterteilung: **16.10.2019**
(21) Anmeldenummer: 13762391.4
(22) Anmeldetag: 16.08.2013
(51) Int. Cl.: F16F 15/131, F16F 15/14

(54) **DREHSCHWINGUNGSDÄMPFER**
TORSIONAL VIBRATION DAMPER
AMORTISSEUR DE VIBRATIONS DE TORSION

(30) Priorität: 24.08.2012 DE 102012215077; 19.11.2012 DE 102012221104
(43) Veröffentlichungstag der Anmeldung: 01.07.2015
(73) Patentinhaber: Schaeffler Technologies AG & Co. KG, 91074 Herzogenaurach (DE)
(72) Erfinder: JUNKER, Uli, 77652 Offenburg (DE); HAGMAYER, Achim, 77830 Bühlertal (DE)
(86) Internationale Anmeldenummer: PCT/DE2013/200127
(87) Internationale Veröffentlichungsnummer: WO 2014/029397

(56) Entgegenhaltungen:
- DE-A1- 10 005 545
- DE-A1-102004 039 905
- DE-A1-102011 105 009
- FR-A1- 2 858 674

## Beschreibung

Die Erfindung betrifft einen Drehschwingungsdämpfer, insbesondere Zweimassenschwungrad, aufweisend ein Eingangsteil und ein Ausgangsteil mit einer gemeinsamen Drehachse, um die das Eingangsteil und das Ausgangsteil zusammen drehbar und relativ zueinander begrenzt verdrehbar sind, eine zwischen dem Eingangsteil und dem Ausgangsteil wirksame Feder-Dämpfer-Einrichtung mit einer Federeinrichtung und eine Fliehkraftpendeleinrichtung mit einem Pendelmassenträgerteil und wenigstens einer an dem Pendelmassenträgerteil unter Fliehkrafteinwirkung verlagerbar angeordneten Pendelmasse, wobei das Pendelmassenträgerteil an dem Ausgangsteil und die Fliehkraftpendeleinrichtung radial außerhalb der Federeinrichtung angeordnet ist.

Aus der DE 102009 030 971 A1 ist eine Drehmomentübertragungseinrichtung bekannt mit mindestens einem Drehschwingungsdämpfer, der ein entgegen der Wirkung zumindest einer Energiespeichereinrichtung gegenüber einem Eingangsteil begrenzt verdrehbares Ausgangsteil umfasst, an dem eine Fliehkraftpendeleinrichtung angebracht ist, bei der die Fliehkraftpendeleinrichtung radial außerhalb der Energiespeichereinrichtung angeordnet ist, um die Drehmomentübertragungseinrichtung, insbesondere im Hinblick auf einen in axialer Richtung benötigten Bauraum, zu verbessern. Gemäß der DE 102009 030 971 A1 ist die Fliehkraftpendeleinrichtung in einem weitgehend fettfreien Raum radial außerhalb der Energiespeichereinrichtung angeordnet ist. Der Raum ist vorzugsweise als Ringraum ausgeführt, der in axialer Richtung von einem zweiten Blechteil und einer Membrandichtung beziehungsweise einer Gegendruckplatte begrenzt wird. In radialer Richtung wird der Raum von dem zweiten Blechteil und der Gegendruckplatte begrenzt. Ein Trägerflansch ist mit Hilfe von Nietverbindungselementen an der Gegendruckplatte befestigt. An dem Trägerflansch ist radial außen die Fliehkraftpendeleinrichtung angebracht. Die Fliehkraftpendeleinrichtung ist in dem weitgehend fettfreien Raum angeordnet und umfasst mehrere Pendelmassen. Ein gattungsgemäßer Drehschwingungsdämpfer ist durch die DE102011105009 A1 offenbart.

Der Erfindung liegt die Aufgabe zugrunde, einen eingangs genannten Drehschwingungsdämpfer baulich und/oder funktional zu verbessern. Insbesondere soll ein nutzbarer Bauraum erweitert sein. Insbesondere soll eine Nietverbindung entfallen. Insbesondere sollen eine Masse der wenigstens einen Pendelmasse und/oder ein Bewegungsraum für die wenigstens eine Pendelmasse vergrößert sein. Insbesondere soll eine Wirksamkeit der Fliehkraftpendeleinrichtung verbessert sein. Insbesondere soll eine Wirksamkeit des Drehschwingungsdämpfers verbessert sein.

Die Lösung der Aufgabe erfolgt mit einem Drehschwingungsdämpfer nach Anspruch 1, insbesondere Zweimassenschwungrad, aufweisend ein Eingangsteil und ein Ausgangsteil mit einer gemeinsamen Drehachse, um die das Eingangsteil und das Ausgangsteil zusammen drehbar und relativ zueinander begrenzt verdrehbar sind, eine zwischen dem Eingangsteil und dem Ausgangsteil wirksame Feder-Dämpfer-Einrichtung mit einer Federeinrichtung und eine Fliehkraftpendeleinrichtung mit einem Pendelmassenträgerteil und wenigstens einer an dem Pendelmassenträgerteil unter Fliehkrafteinwirkung verlagerbar angeordneten Pendelmasse, wobei das Pendelmassenträgerteil an dem Ausgangsteil und die Fliehkraftpendeleinrichtung radial außerhalb der Federeinrichtung angeordnet ist, bei dem eine Verbindung zwischen dem Pendelmassenträgerteil und dem Ausgangsteil radial außerhalb der wenigstens einen Pendelmasse angeordnet ist wobei das Ausgangsteil als Blechteil ausgestaltet ist.

Der Drehschwingungsdämpfer kann zur Anordnung in einem Antriebsstrang eines Kraftfahrzeugs geeignet sein. Der Antriebsstrang kann eine Brennkraftmaschine aufweisen. Der Antriebsstrang kann eine Reibungskupplung aufweisen. Der Antriebsstrang kann ein Getriebe aufweisen. Das Getriebe kann Getriebewellen aufweisen. Der Antriebsstrang kann wenigstens ein antreibbares Rad aufweisen. Der Drehschwingungsdämpfer kann zur Anordnung zwischen der Brennkraftmaschine und der Reibungskupplung geeignet sein. Der Drehschwingungsdämpfer kann dazu dienen, Drehschwingungen zu reduzieren, die durch periodische Vorgänge, insbesondere in der Brennkraftmaschine, angeregt werden.

Das Eingangsteil kann zur Antriebsverbindung mit der Brennkraftmaschine dienen. Das Ausgangsteil kann zur Antriebsverbindung mit der Reibungskupplung dienen. Die Begriffe "Eingangsteil" und "Ausgangsteil" sind auf eine von der Brennkraftmaschine ausgehende Leistungsflussrichtung bezogen. Die Federeinrichtung kann wenigstens einen Energiespeicher aufweisen. Die Federeinrichtung kann wenigstens eine Bogenfeder aufweisen. Das Eingangsteil kann einen Aufnahmeraum für die Federeinrichtung aufweisen. Das Eingangsteil kann einen Flanschabschnitt und einen Deckelabschnitt aufweisen. Der Aufnahmeraum kann zwischen dem Flanschabschnitt und einen Deckelabschnitt gebildet sein. Dieser Aufnahmeraum kann ein erster Aufnahmeraum sein. Die Federeinrichtung kann in dem ersten Aufnahmeraum angeordnet sein. Die Federeinrichtung kann sich einerseits an dem Eingangsteil und andererseits an dem Ausgangsteil abstützen. Die Feder-Dämpfer-Einrichtung kann eine Dämpfereinrichtung aufweisen. Die Dämpfereinrichtung kann die Reibeinrichtung aufweisen.

Mit dem erfindungsgemäßen Drehschwingungsdämpfer ist ein nutzbarer Bauraum erweitert. Eine Nietverbindung kann entfallen. Eine Masse der wenigstens einen Pendelmasse und/oder ein Bewegungsraum für die wenigstens eine Pendelmasse ist vergrößert. Eine Wirksamkeit der Fliehkraftpendeleinrichtung ist verbessert. Eine Wirksamkeit des Drehschwingungsdämpfers ist verbessert.

Der Drehschwingungsdämpfer kann einen Aufnahmeraum für die Fliehkraftpendeleinrichtung aufweisen. Der Aufnahmeraum kann zwischen dem Eingangsteil und dem Ausgangsteil gebildet sein. Dieser Aufnahmeraum kann ein zweiter Aufnahmeraum sein. Die Fliehkraftpendeleinrichtung kann in dem zweiten Aufnahmeraum angeordnet sein. Der zweite Aufnahmeraum kann eine ringartige Form aufweisen. Der zweite Aufnahmeraum kann radial außerhalb des ersten Aufnahmeraums angeordnet sein. Die Federeinrichtung und die Fliehkraftpendeleinrichtung können in Erstreckungsrichtung der Drehachse zumindest annähernd auf gleicher Höhe angeordnet sein.

Das Pendelmassenträgerteil und das Ausgangsteil können miteinander stoffschlüssig, insbesondere verschweißt, kraftschlüssig und/oder formschlüssig verbunden sein. Das Ausgangsteil und das Pendelmassenträgerteil können mithilfe einer radialen Schweißnaht miteinander verbunden sein. Das Ausgangsteil kann eine Schwungmasse aufweisen. Das Pendelmassenträgerteil und die Schwungmasse können einen schweißbaren Werkstoff aufweisen. Das Pendelmassenträgerteil und/oder die Schwungmasse können einen oberflächengehärteten Werkstoff aufweisen, wobei eine Oberflächenschicht vor einem Verschweißen abschnittsweise entfernt ist. Das Ausgangsteil und die Schwungmasse können mithilfe einer radialen Schweißnaht miteinander verbunden sein. Die Schweißnaht kann umlaufend sein. Die Schweißnaht kann von radial außen hergestellt sein. Das Pendelmassenträgerteil und/oder die Schwungmasse können Blechteile sein. Das Pendelmassenträgerteil und/oder die Schwungmasse können in einem Stanz-Verfahren oder in einem Stanz-Umform-Verfahren hergestellt sein.

Das Ausgangsteil kann eine Schwungmasse mit einem Scheibenabschnitt, einem Anlageabschnitt für eine Reibungskupplung und einem Verbindungsabschnitt für das Pendelmassenträgerteil aufweisen. Der Scheibenabschnitt kann sich im Wesentlichen in radialer Richtung erstrecken. Die Schwungmasse kann wenigstens einen Einsatz zur Verbindung mit dem Pendelmassenträgerteil aufweisen. Der wenigstens eine Einsatz kann den Verbindungsabschnitt der Schwungmasse bilden. Der wenigstens eine Einsatz kann aus einem gut schweißbaren Stahl bestehen. Der wenigstens eine Einsatz kann mit der Schwungmasse kraft-, form- und/oder stoffschlüssig verbunden sein. Der wenigstens eine Einsatz kann in die Schwungmasse eingegossen sein. Der Verbindungsabschnitt kann in Erstreckungsrichtung der Drehachse zu dem Eingangsteil hin gerichtet sein und die Fliehkraftpendeleinrichtung radial außenseitig umgreifen. Der Verbindungsabschnitt kann sich im Wesentlichen in Erstreckungsrichtung der Drehachse erstrecken. Der Verbindungsabschnitt der Schwungmasse kann in Erstreckungsrichtung der Drehachse eingangsteilseitig über den Scheibenabschnitt überstehen. Der Anlageabschnitt der Schwungmasse kann in Erstreckungsrichtung der Drehachse reibungskupplungsseitig über den Scheibenabschnitt überstehen und durch umlaufende oder abschnittsweise Umformung der Schwungmasse gebildet sein. Der Scheibenabschnitt kann eine topfartige Form aufweisen. Der Scheibenabschnitt kann doppelt getopfte Form aufweisen. Der Scheibenabschnitt kann eine kreisringartige Form aufweisen.

Die Schwungmasse kann einen Konturabschnitt zum formschlüssigen Zentrieren des Pendelmassenträgerteils aufweisen. Der Konturabschnitt kann an der Schwungmasse radial außen angeordnet sein. Der Konturabschnitt kann mit einem Außenradius der Schwungmasse gebildet sein. Der Konturabschnitt kann mit einem Innenradius der Schwungmasse gebildet sein. Der Konturabschnitt kann eine radiale Anlagefläche für das Pendelmassenträgerteil aufweisen. Der Konturabschnitt kann eine axiale Anlagefläche für das Pendelmassenträgerteil aufweisen. Der Konturabschnitt kann eine stufenartige Form aufweisen. Eine Verbindung zwischen dem Pendelmassenträgerteil und dem Ausgangsteil, insbesondere der Schwungmasse, kann im Bereich des Konturabschnitts angeordnet sein.

Das Pendelmassenträgerteil kann eine ringartige Form mit einem I-artigen, L-artigen oder T-artigen Querschnitt aufweisen. Ein Pendelmassenträgerteil mit einem I-artigen Querschnitt kann radial innerhalb des Verbindungsabschnitts der Schwungmasse angeordnet sein. Ein Pendelmassenträgerteil mit einem L-artigen oder einem T-artigen Querschnitt kann eine radial äußere Begrenzung des Drehschwingungsdämpfers bilden. Ein Pendelmassenträgerteil mit einem L-artigen oder einem T-artigen Querschnitt kann mit einem in Erstreckungsrichtung der Drehachse gerichteten Schenkel mit dem Ausgangsteil, insbesondere der Schwungmasse, verbunden sein. Ein Pendelmassenträgerteil mit einem T-artigen Querschnitt bildet einen Berstschutz für die Fliehkraftpendeleinrichtung.

Zusammenfassend und mit anderen Worten dargestellt ergibt sich somit durch die Erfindung unter anderem ein Fliehkraftpendel mit einem Stahl-Sekundärschwungrad. Eine Guss-Sekundärschwungscheibe kann durch eine Stahl-Sekundärschwungscheibe ersetzt sein. Dadurch kann das Fliehkraftpendel anstelle einer Vernietung mit der Sekundärschwungscheibe verschweißt sein.

Die Stahl-Sekundärschwungscheibe kann zuerst nach rechts Richtung Kupplungs-Druckplatten-Anschraubfläche und anschließend nach links Richtung Motor getopft sein. Das Fliehkraftpendel kann rückseitig in den Topf der Sekundärschwungscheibe eingeschoben und mit einer radialen Schweißnaht (Durchschweißung) dauerhaft verbunden sein. Um einen gehärteten Fliehkraftpendel-Flansch schweißen zu können, kann vorab eine Einsatzhärteschicht abgedreht sein.

Die Sekundärschwungscheibe kann aus einer mehr oder weniger ebenen Scheibe bestehen, wobei die Kupplungs-Druckplatten-Anschraubbereiche partiell durchgestellt sind. Der Fliehkraftpendel-Flansch kann L-förmig bzw. als Topf ausgebildet sein. Die Sekundärschwungscheibe kann eine entsprechende Kontur an einem Außendurchmesser besitzen, sodass das Fliehkraftpendel zentriert und mit einer konventionellen radialen Schweißnaht angebunden sein kann. Der Fliehkraftpendel-Flansch kann werkzeugfallend bzw. aus einem Blech hergestellt sein.

Der Fliehkraftpendel-Flansch kann T-förmig ausgeführt sein. Das bringt einerseits mehr sekundärseitiges Massenträgheitsmoment und andererseits stellt der Fliehkraftpendel-Flansch in dieser Bauweise eine Fail-Save-Funktion dar, damit die Pendelmassen in jedem erdenklichen Fall innerhalb des Dämpfers verbleiben.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: ein Zweimassenschwungrad mit einer Fliehkraftpendeleinrichtung mit einem ringartigen Pendelmassenträgerteil mit I-förmigem Querschnitt in ausschnittsweiser Schnittdarstellung,
- Fig. 2: ein Zweimassenschwungrad mit einer Fliehkraftpendeleinrichtung mit einem ringartigen Pendelmassenträgerteil mit L-förmigem Querschnitt in ausschnittsweiser Schnittdarstellung,
- Fig. 3: ein Zweimassenschwungrad mit einer Fliehkraftpendeleinrichtung mit einem ringartigen Pendelmassenträgerteil mit T-förmigem Querschnitt in ausschnittsweiser Schnittdarstellung und
- Fig. 4: ein Zweimassenschwungrad mit einer Fliehkraftpendeleinrichtung mit einem ringartigen Pendelmassenträgerteil und einer Schwungmasse mit Stahlinserts in ausschnittsweiser Schnittdarstellung.

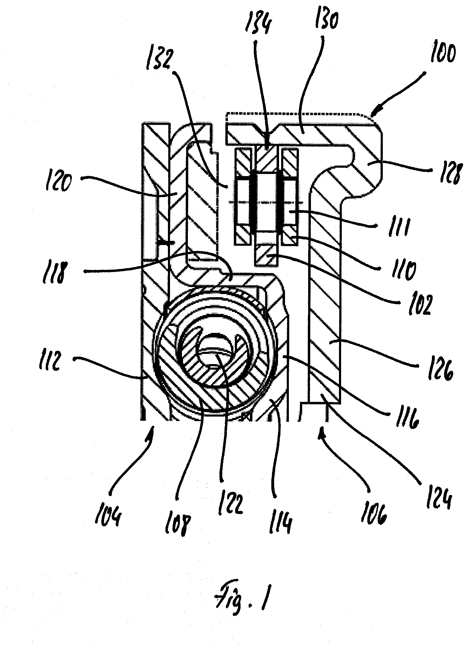

Fig. 1 zeigt ein Zweimassenschwungrad 100 mit einer Fliehkraftpendeleinrichtung mit einem ringartigen Pendelmassenträgerteil 102 mit I-förmigem Querschnitt in ausschnittsweiser Schnittdarstellung.

Das Zweimassenschwungrad 100 weist ein Eingangsteil 104 und ein Ausgangsteil 106 auf. Das Zweimassenschwungrad 100 ist um eine Drehachse drehbar. Das Eingangsteil 104 und das Ausgangsteil 106 sind relativ zueinander begrenzt um die Drehachse verdrehbar. Das Eingangsteil 104 kann mit einer Brennkraftmaschine verbunden werden. Das Ausgangsteil 106 kann mit einer Kupplung verbunden werden. Zwischen dem Eingangsteil 104 und dem Ausgangsteil 106 ist eine Feder-Dämpfer-Einrichtung wirksam. Die Feder-Dämpfer-Einrichtung weist eine Federeinrichtung auf. Die Federeinrichtung weist Bogenfedern 108 auf. Die Feder-Dämpfer-Einrichtung weist die Reibeinrichtung auf. Die Federeinrichtung und die Reibeinrichtung sind in Parallelschaltung angeordnet. An dem Pendelmassenträgerteil 102 der Fliehkraftpendeleinrichtung sind Pendelmassen 110 verschwenkbar angeordnet. Zur verschwenkbaren Anordnung der Pendelmassen 110 an dem Pendelmassenträgerteil 102 dienen Pendelrollen 111. Die Pendelmassen 110 sind beidseits des Pendelmassenträgerteils 102 angeordnet.

Das Eingangsteil 104 des Zweimassenschwungrads 100 weist einen Flanschabschnitt 112 und einen Deckelabschnitt 114 auf. Der Flanschabschnitt 112 und der Deckelabschnitt 114 sind miteinander fest verbunden. Der Flanschabschnitt 112 und der Deckelabschnitt 114 sind miteinander verschweißt. Der Flanschabschnitt 112 weist eine scheibenartige Form auf. Der Flanschabschnitt 112 dient zur Verbindung des Zweimassenschwungrads 100 mit der Brennkraftmaschine. Der Deckelabschnitt 114 weist eine hutartige Form mit einem Bodenabschnitt 116 einem Wandabschnitt 118 und einem Randabschnitt 120 auf. Der Deckelabschnitt 114 liegt mit seinem Randabschnitt 120 an dem Flanschabschnitt 112 an. Der Flanschabschnitt 112, der Wandabschnitt 118 des Deckelabschnitts 114 und der Bodenabschnitt 116 des Deckelabschnitts 114 begrenzen einen Aufnahmeraum 122 für die Federeinrichtung.

Das Ausgangsteil 106 weist eine Schwungmasse 124 auf.Die Schwungmasse 124 weist einen Scheibenabschnitt 126, einen Anlageabschnitt 128 für eine Reibungskupplung und einen Verbindungsabschnitt 130 für das Pendelmassenträgerteil 102 auf. Der Anlageabschnitt 128 steht über den Scheibenabschnitt 126 in Erstreckungsrichtung der Drehachse zu einer Reibungskupplungsseite hin über. Der Anlageabschnitt 128 ist umlaufend ausgebildet. Der Verbindungsabschnitt 130 erstreckt sich ausgehend von dem Scheibenabschnitt 126 in Erstreckungsrichtung der Drehachse zu dem Eingangsteil 104 hin. Der Anlageabschnitt 128 und der Verbindungsabschnitt 130 sind durch eine doppelte Topfung der Schwungmasse 124 gebildet. Der Randabschnitt 120 des Deckelabschnitts 114, der Wandabschnitt 118 des Deckelabschnitts 114, ein radial äußerer Bereich des Scheibenabschnitts 126 der Schwungmasse 124 und der Verbindungsabschnitt 130 der Schwungmasse 124 begrenzen einen Aufnahmeraum 132 für die Fliehkraftpendeleinrichtung. Der Verbindungsabschnitt 130 der Schwungmasse 124 umgreift die Fliehkraftpendeleinrichtung von radial außen und bildet damit einen Berstschutz. Die Schwungmasse 124 ist ein Blechteil. Die Schwungmasse 124 ist in einem Stanz-Umform-Verfahren hergestellt.

Das Pendelmassenträgerteil 102 weist eine kreisringscheibenartige Form mit einem I-artigen Querschnitt auf. Das Pendelmassenträgerteil 102 ist radial innerhalb des Verbindungsabschnitts 130 der Schwungmasse 124 angeordnet. Das Pendelmassenträgerteil 102 weist einen radial äußeren Rand auf. Das Pendelmassenträgerteil 102 ist mit seinem radial äußeren Rand mit dem Verbindungsabschnitt 130 der Schwungmasse 124 verschweißt. Dazu wird zunächst das Pendelmassenträgerteil 102 in die Schwungmasse 124 eingesetzt und dabei mit seinem radial äußeren Rand an dem Verbindungsabschnitt 130 zentriert. Nachfolgend wird die Schweißnaht 134 als Durchschweißung von radial außen erzeugt. Im Rahmen einer Schweißnahtvorbereitung wird eine Dicke des Verbindungsabschnitts 130 im Bereich der herzustellenden Schweißnaht reduziert. Das Pendelmassenträgerteil 102 ist einsatzgehärtet. Im Rahmen einer Schweißnahtvorbereitung wird eine Oberflächenschicht des Pendelmassenträgerteils 102 entfernt. Das Pendelmassenträgerteil 102 und die Schwungmasse 124 bestehen aus einem Stahl mit guter Schweißeignung.

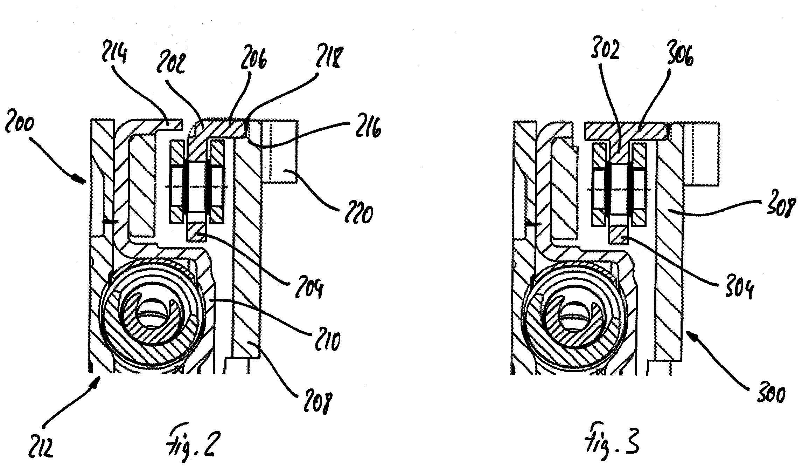

Fig. 2 zeigt ein Zweimassenschwungrad 200 mit einer Fliehkraftpendeleinrichtung mit einem ringartigen Pendelmassenträgerteil 202 mit L-förmigem Querschnitt in ausschnittsweiser Schnittdarstellung. Das Pendelmassenträgerteil 202 weist einen radial verlaufenden Schenkel 204 und einen in Erstreckungsrichtung der Drehachse verlaufenden Schenkel 206 auf. Der Schenkel 206 ist zu der Schwungmasse 208 hin gerichtet. Das Pendelmassenträgerteil 202 ist mit seinem Schenkel 206 mit der Schwungmasse 208 verschweißt. Der Schenkel 206 überdeckt die Fliehkraftpendeleinrichtung radial außenseitig teilweise. Das Deckelteil 210 des Eingangsteils 212 weist einen in Erstreckungsrichtung der Drehachse zu dem Pendelmassenträgerteil 202 hin verlängerten Rand 214 auf. Der Rand 214 überdeckt die Fliehkraftpendeleinrichtung radial außenseitig teilweise.

Die Schwungmasse 204 weist eine scheibenartige Form auf. Die Schwungmasse 204 weist einen radial äußeren Rand auf. Der Verbindungsabschnitt 216 der Schwungmasse 204 ist an ihrem radial äußeren Rand angeordnet. Der Verbindungsabschnitt 216 weist eine stufenartige Ausnehmung auf, in der das Pendelmassenträgerteil 202 mit einem Ende seines Schenkels 206 angeordnet ist. Damit können das Pendelmassenträgerteil 202 und die Schwungmasse 204 bei einer Herstellung aneinander zentriert werden. Die Schweißnaht 218 ist an einer Stoßstelle zwischen dem Pendelmassenträgerteil 202 und der Schwungmasse 204 angeordnet. Der Anlageabschnitt 220 ist als partielle Durchstellung ausgeführt. Im Übrigen wird ergänzend insbesondere auf Fig. 1 und die zugehörige Beschreibung verwiesen.

Fig. 3 zeigt ein Zweimassenschwungrad 300 mit einer Fliehkraftpendeleinrichtung mit einem ringartigen Pendelmassenträgerteil 302 mit T-förmigem Querschnitt in ausschnittsweiser Schnittdarstellung. Das Pendelmassenträgerteil 302 weist einen radial verlaufenden Steg 304 und einen in Erstreckungsrichtung der Drehachse verlaufenden Steg 306 auf. Der Steg 306 überdeckt die Fliehkraftpendeleinrichtung radial außenseitig. Das Pendelmassenträgerteil 302 ist mit seinem Steg 306 mit der Schwungmasse 308 verschweißt. Im Übrigen wird ergänzend insbesondere auf Fig. 1 und Fig. 2 sowie die zugehörige Beschreibung verwiesen.

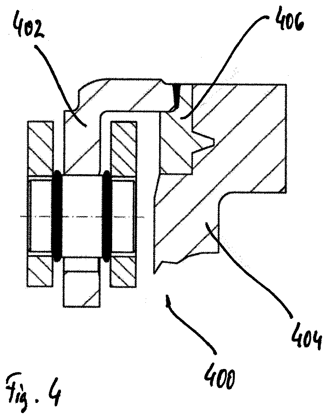

Fig. 4 zeigt ein Zweimassenschwungrad 400 mit einer Fliehkraftpendeleinrichtung mit einem ringartigen Pendelmassenträgerteil 402 und einer Schwungmasse 404 mit Stahlinserts, wie 406, in ausschnittsweiser Schnittdarstellung. Die Stahlinserts 406 bestehen aus einem gut schweißbaren Stahl. Damit kann die übrige Schwungmasse 404 aus einem Material bestehen, dessen Schweißbarkeit nicht maßgeblich ist. Die Stahlinserts 406 sind vorliegend in die Schwungmasse 404 eingegossen. Die Stahlinserts 406 weisen jeweils einen Konturabschnitt auf, der einen formschlüssigen Halt des Stahlinserts 406 an der Schwungmasse 404 bewirkt. Im Übrigen wird ergänzend insbesondere auf Fig. 1, Fig. 2 und Fig. 3 sowie die zugehörige Beschreibung verwiesen.

### Bezugszeichenliste

- 100: Zweimassenschwungrad
- 102: Pendelmassenträgerteil
- 104: Eingangsteil
- 106: Ausgangsteil
- 108: Bogenfeder
- 110: Pendelmasse
- 111: Pendelrolle
- 112: Flanschabschnitt
- 114: Deckelabschnitt
- 116: Bodenabschnitt
- 118: Wandabschnitt
- 120: Randabschnitt
- 122: Aufnahmeraum
- 124: Schwungmasse
- 126: Scheibenabschnitt
- 128: Anlageabschnitt
- 130: Verbindungsabschnitt
- 132: Aufnahmeraum
- 134: Schweißnaht

- 200: Zweimassenschwungrad
- 202: Pendelmassenträgerteil
- 204: Schenkel
- 206: Schenkel
- 208: Schwungmasse
- 210: Deckelteil
- 212: Eingangsteil
- 214: Rand
- 216: Verbindungsabschnitt
- 218: Schweißnaht
- 220: Anlageabschnitt
- 300: Zweimassenschwungrad
- 302: Pendelmassenträgerteil
- 304: Steg
- 306: Steg
- 308: Schwungmasse

- 400: Zweimassenschwungrad
- 402: Pendelmassenträgerteil
- 404: Schwungmasse
- 406: Stahlinsert

## Patentansprüche

1. Drehschwingungsdämpfer (100, 200, 300, 400), insbesondere Zweimassenschwungrad, aufweisend ein Eingangsteil (104, 212) und ein Ausgangsteil (106) mit einer gemeinsamen Drehachse, um die das Eingangsteil (104, 212) und das Ausgangsteil (106) zusammen drehbar und relativ zueinander begrenzt verdrehbar sind, eine zwischen dem Eingangsteil (104, 212) und dem Ausgangsteil (106) wirksame Feder-Dämpfer-Einrichtung mit einer Federeinrichtung (108) und eine Fliehkraftpendeleinrichtung mit einem Pendelmassenträgerteil (102, 202, 302, 402) und wenigstens einer an dem Pendelmassenträgerteil (102, 202, 302) unter Fliehkrafteinwirkung verlagerbar angeordneten Pendelmasse (110), wobei das Pendelmassenträgerteil (102, 202, 302, 402) an dem Ausgangsteil (106) und die Fliehkraftpendeleinrichtung radial außerhalb der Federeinrichtung (108) angeordnet ist, wobei eine Verbindung zwischen dem Pendelmassenträgerteil (102, 202, 302, 402) und dem Ausgangsteil (106) radial außerhalb der wenigstens einen Pendelmasse (110) angeordnet ist, **dadurch gekennzeichnet, dass** das Ausgangsteil (106) als Blechteil ausgestaltet ist.

2. Drehschwingungsdämpfer (100, 200, 300, 400) nach Anspruch 1, **dadurch gekennzeichnet, dass** das Pendelmassenträgerteil (102, 202, 302, 402) und das Ausgangsteil (106) miteinander stoffschlüssig, insbesondere verschweißt, kraftschlüssig und/oder formschlüssig verbunden sind.

3. Drehschwingungsdämpfer (100, 200, 300, 400) nach wenigstens einem der vorhergehenden Ansprüche, **dadurch gekennzeichnet, dass** das Ausgangsteil (106) und das Pendelmassenträgerteil (102, 202, 302, 402) mithilfe einer radialen Schweißnaht (134, 218) miteinander verbunden sind.

4. Drehschwingungsdämpfer (100, 200, 300, 400) nach wenigstens einem der vorhergehenden Ansprüche, **dadurch gekennzeichnet, dass** das Ausgangsteil (106) eine Schwungmasse (124, 208, 308, 404) mit einem Scheibenabschnitt (126), einem Anlageabschnitt (128) für eine Reibungskupplung und einem Verbindungsabschnitt (130) für das Pendelmassenträgerteil(102, 202, 302, 402) aufweist.

5. Drehschwingungsdämpfer (400) nach Anspruch 4, **dadurch gekennzeichnet, dass** die Schwungmasse (404) wenigstens einen Einsatz (406) zur Verbindung mit dem Pendelmassenträgerteil (402) aufweist.

6. Drehschwingungsdämpfer (100) nach Anspruch 4-5, **dadurch gekennzeichnet, dass** der Verbindungsabschnitt (130) der Schwungmasse (124) in Erstreckungsrichtung der Drehachse zu dem Eingangsteil (104) hin gerichtet ist und die Fliehkraftpendeleinrichtung radial außenseitig umgreift.

7. Drehschwingungsdämpfer (100, 200, 300, 400) nach wenigstens einem der Ansprüche4-6, **dadurch gekennzeichnet, dass** der Anlageabschnitt (128) der Schwungmasse (124, 208, 308) in Erstreckungsrichtung der Drehachse reibungskupplungsseitig über den Scheibenabschnitt (126) übersteht und durch umlaufende oder abschnittsweise Umformung der Schwungmasse (124, 208, 308) gebildet ist.

8. Drehschwingungsdämpfer (100, 200, 300, 400) nach wenigstens einem der Ansprüche 4-7, **dadurch gekennzeichnet, dass** die Schwungmasse (124, 208, 308) einen Konturabschnitt zum formschlüssigen Zentrieren des Pendelmassenträgerteils (102, 202, 302, 402) aufweist.

9. Drehschwingungsdämpfer (100, 200, 300, 400) nach wenigstens einem der vorhergehenden Ansprüche, **dadurch gekennzeichnet, dass** das Pendelmassenträgerteil (102, 202, 302, 402) eine ringartige Form mit einem I-artigen, L-artigen oder T-artigen Querschnitt aufweist.

## Claims

1. Torsional vibration damper (100, 200, 300, 400), in particular dual-mass flywheel, having an input part (104, 212) and an output part (106) with a common axis of rotation about which the input part (104, 212) and the output part (106) can be rotated together and can be rotated relative to one another to a limited degree, a spring damper device which acts between the input part (104, 212) and the output part (106) and which has a spring device (108), and a centrifugal force pendulum device with a pendulum mass support part (102, 202, 302, 402) and at least one pendulum mass (110) which is arranged on the pendulum mass support part (102, 202, 302) so as to be displaceable under the effect of centrifugal force, wherein the pendulum mass support part (102, 202, 302, 402) is arranged on the output part (106), and the centrifugal force pendulum device is arranged radially outside the spring device (108), wherein a connection between the pendulum mass support part (102, 202, 302, 402) and the output part (106) is arranged radially outside the at least one pendulum mass (110), **characterized in that** the output part (106) is designed as a sheet metal part.

2. Torsional vibration damper (100, 200, 300, 400) according to Claim 1, **characterized in that** the pendulum mass support part (102, 202, 302, 402) and the output part (106) are connected to one another in an integrally bonded manner, in particular by welding, in a force-fitting manner and/or form-fitting manner.

3. Torsional vibration damper (100, 200, 300, 400) according to at least one of the preceding claims, **characterized in that** the output part (106) and the pendulum mass support part (102, 202, 302, 402) are connected to one another by means of a radial weld seam (134, 218).

4. Torsional vibration damper (100, 200, 300, 400) according to at least one of the preceding claims, **characterized in that** the output part (106) has a centrifugal mass (124, 208, 308, 404) with a disc portion (126), a bearing portion (128) for a friction clutch and a connecting portion (130) for the pendulum mass support part (102, 202, 302, 402).

5. Torsional vibration damper (400) according to Claim 4, **characterized in that** the centrifugal mass (404) has at least one insert (406) for connecting to the pendulum mass support part (402).

6. Torsional vibration damper (100) according to Claims 4-5, **characterized in that** the connecting portion (130) of the centrifugal mass (124) is directed towards the input part (104) in the direction of extent of the axis of rotation and engages around the centrifugal force pendulum device radially on the outside.

7. Torsional vibration damper (100, 200, 300, 400) according to at least one of Claims 4-6, **characterized in that** the bearing portion (128) of the centrifugal mass (124, 208, 308) projects beyond the disc portion (126) in the direction of extent of the axis of rotation on the friction clutch side and is formed by peripheral or zonal forming of the centrifugal mass (124, 208, 308).

8. Torsional vibration damper (100, 200, 300, 400) according to at least one of Claims 4-7, **characterized in that** the centrifugal mass (124, 208, 308) has a contour portion for the form-fitting centring of the pendulum mass support part (102, 202, 302, 402).

9. Torsional vibration damper (100, 200, 300, 400) according to at least one of the preceding claims, **characterized in that** the pendulum mass support part (102, 202, 302, 402) has a ring-like shape with an I-like, L-like or T-like cross section.

## Revendications

1. Amortisseur de vibrations de torsion (100, 200, 300, 400), en particulier un volant à deux masses, comprenant un élément d'entrée (104, 212) et un élément de sortie (106) ayant un axe de rotation commun sur lequel l'élément d'entrée (104, 212) et l'élément de sortie (106) peuvent tourner conjointement et de manière limitée l'un par rapport à l'autre, un dispositif amortisseur à ressort (106), pourvu d'un dispositif à ressort (108), agissant entre l'élément d'entrée (104, 212) et l'élément de sortie (106) et un dispositif à pendule centrifuge comportant un élément de support de masse pendulaire (102, 202, 302, 402) et au moins une masse pendulaire (110) disposée de manière déplaçable sous l'action de la force centrifuge sur l'élément de support de masse pendulaire (102, 202, 302), l'élément de support de masse pendulaire (102, 202, 302, 402) étant disposé au niveau de l'élément de sortie (106) et le dispositif à pendule centrifuge étant disposé radialement à l'extérieur du dispositif à ressort (108), une liaison entre l'élément de support de masse pendulaire (102, 202, 302, 402) et l'élément de sortie (106) étant disposée radialement à l'extérieur de l'au moins une masse pendulaire (110), **caractérisé en ce que**
l'élément de sortie (106) est réalisé sous la forme d'une pièce en tôle.

2. Amortisseur de vibrations de torsion (100, 200, 300, 400) selon la revendication 1, **caractérisé en ce que** l'élément de support de masse pendulaire (102, 202, 302, 402) et l'élément de sortie (106) sont reliés par une liaison de matière, notamment sont soudés, par une liaison en force et/ou par une liaison par complémentarité de formes.

3. Amortisseur de vibrations de torsion (100, 200, 300, 400) selon l'une au moins des revendications précédentes, **caractérisé en ce que** l'élément de sortie (106) et l'élément de support de masse pendulaire (102, 202, 302, 402) sont reliés l'un à l'autre par un cordon de soudure radial (134, 218).

4. Amortisseur de vibrations de torsion (100, 200, 300, 400) selon l'une au moins des revendications précédentes, **caractérisé en ce que** l'élément de sortie (106) comporte une masse d'inertie (124, 208, 308, 404) pourvue d'une partie disque (126), d'une partie d'appui (128) destinée à un embrayage à friction et une partie de liaison (130) destinée à l'élément de support de masse pendulaire (102, 202, 302, 402).

5. Amortisseur de vibrations de torsion (400) selon la revendication 4, **caractérisé en ce que** la masse d'inertie (404) comporte au moins un insert (406) destiné à être relié à l'élément de support de masse pendulaire (402).

6. Amortisseur de vibrations de torsion (100) selon les revendications 4 à 5, **caractérisé en ce que** l'élément de liaison (130) de la masse d'inertie (124) est dirigé dans la direction d'extension de l'axe de rotation par rapport à l'élément d'entrée (104) et le dispositif à pendule centrifuge s'engage radialement du côté extérieur.

7. Amortisseur de vibrations de torsion (100, 200, 300, 400) selon l'une au moins des revendications 4 à 6, **caractérisé en ce que** l'élément de contact (128) de la masse d'inertie (124, 208, 308) fait saillie de la partie de disque (126) du côté d'accouplement par friction dans la direction d'extension de l'axe de rotation et est formé par déformation circonférentielle ou partielle de la masse d'inertie (124, 208, 308).

8. Amortisseur de vibrations de torsion (100, 200, 300, 400) selon l'une au moins des revendications 4 à 7, **caractérisé en ce que** la masse d'inertie (124, 208, 308) comporte une partie de contour destinée à centrer par complémentarité de formes l'élément de support de masse pendulaire (102, 202, 302, 402).

9. Amortisseur de vibrations de torsion (100, 200, 300, 400) selon l'une au moins des revendications précédentes, **caractérisé en ce que** l'élément de support de masse pendulaire (102, 202, 302, 402) a la forme d'un anneau de section transversale en forme de I, de L ou de T.
